# EUROPEAN PATENT SPECIFICATION

(11) **EP 1 275 464 B1**
(45) Date of publication and mention of the grant of the patent: **26.05.2004**
(21) Application number: 02014409.3
(22) Date of filing: 28.06.2002
(51) Int. Cl.: B23K 26/03, B23K 26/24

(54) **A system for controlling the quality of a laser weld**
System zur Kontrolle der Qualität einer Laserschweissung
Système de commande de la qualité d'une soudure laser

(30) Priority: 13.07.2001 IT TO20010688
(43) Date of publication of application: 15.01.2003
(73) Proprietor: C.R.F. Società Consortile per Azioni, 10043 Orbassano (Torino) (IT)
(72) Inventor: Bolognese Luca, 16155 Genova (IT); Pasquettaz Giorgio, 13100 Vercelli (IT); Mairone, Paolo, 10100 Torino (IT); D'Angelo, Giuseppe, 10095 Grugliasco (IT)
(74) Representative: Notaro, Giancarlo

(56) References cited:
- GB-A- 2 283 113

## Description

The present invention relates to a system for controlling the quality of laser welds according to preamble of claim 1 and a process according to preamble of claim 7.

Systems of the type referred to above have already been proposed and used in the past for carrying out on-line monitoring of the laser-welding process, in particular in the case of welding of sheet metal. The control system is able to evaluate the presence of porosity in the welding zone, or else, in the case of butt-jointed thin metal sheet, the presence of defects due to overlapping or separation of the sheets.

The drawback of the systems used up to the present lies in the fact that they base the control of the quality on a comparison between the signals detected during the process and one or more pre-determined reference signals which indicate a good-quality weld, the aforesaid reference signals, which usually range in number between two and ten, are pre-arranged starting from a number of good-quality welding samples. Obviously, such a mode of procedure implies the presence of a skilled operator capable of certifying the goodness of the weld at the moment of creation of the reference signals, entails expenditure in terms of time, and sometimes also involves waste of material (which is lost for preparing the samples necessary for obtaining the reference signals). In some cases also reference signals indicating a weld presenting defects are pre-arranged, this involving additional problems and difficulties.

The purpose of the present invention is to overcome all the drawbacks mentioned above.

With a view to achieving the above purpose, the subject of the present invention is a system for controlling the quality of a laser weld according to claim 1 and a process according to claim 7.

According to the preferred embodiment of the invention, the aforesaid control and processing means are designed to divide the acquired and filtered signal into blocks, to average the signal for each block sampled, and to identify the presence of a welding defect, in the case where one or more of said blocks has a value lower than or equal to the offset of the sensor means.

Tests conducted by the applicant have shown that, thanks to the aforesaid characteristics, the mere analysis of the signal detected during the welding process is thus sufficient for enabling identification of possible defects, without any need to pre-arrange reference signals indicating a good-quality weld, and hence with the advantage of eliminating the relatively laborious operations for pre-arranging the reference signals.

Of course, the subject of the invention is also the procedure for controlling the quality of a laser weld, which makes use of the system described above.

Further characteristics and advantages of the present invention will emerge from the ensuing description, with reference to the attached drawings, which are provided purely by way of non-limiting example, and in which:
- Figure 1 is a schematic view of a system according to the invention;
- Figure 2 is a diagram illustrating the spectral response of the photodiode used in the system according to the invention; and
- Figure 3 is a schematic view of the sensor means forming part of the system illustrated in Figure 1.

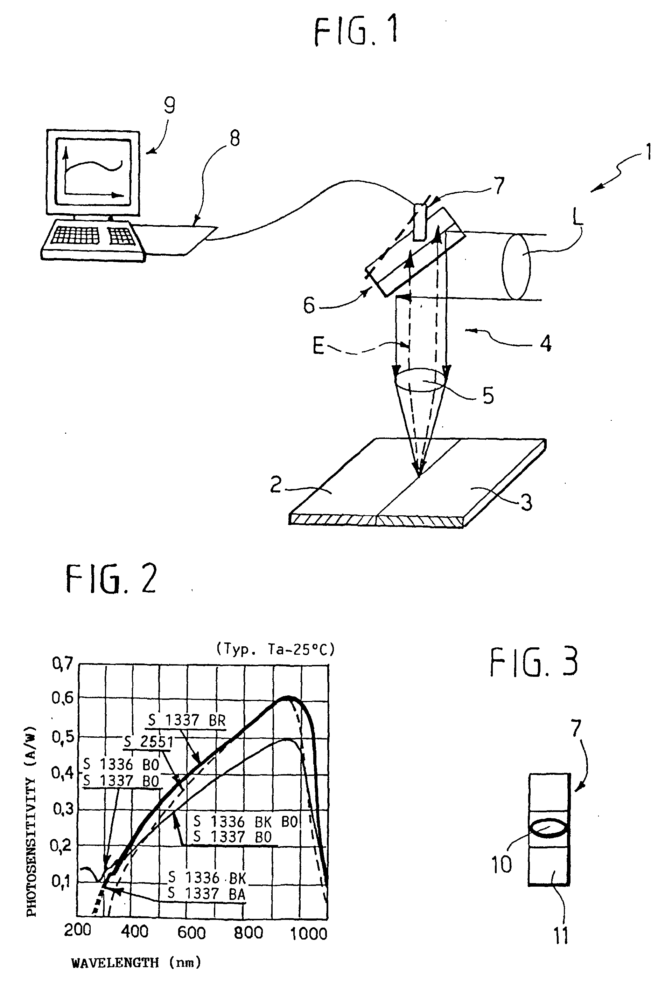

With reference to Figure 1, the reference number 1 designates as a whole a system for controlling the quality of a laser-welding process. The example relates to the case of two sheets of metal 2, 3, which are welded together using a laser beam. The reference number 4 designates as a whole the focusing head, which includes a lens 5 that is reached by the laser beam originating from a laser generator (not illustrated) and reflected by a half-reflecting mirror 6. The radiation E emitted by the welding zone passes through the half-reflecting mirror 6 and is captured by a sensor 7 consisting of a photodiode that is able to send its output signal to an electronic control and processing unit 8 associated to a personal computer 9.

According to a concrete embodiment of the invention, the half-reflecting mirror 6 used was a Zn-Se mirror having a diameter of 2 inches, and a thickness of 5 mm. The sensor 7 was a photodiode with a spectral response of between 190 and 1100 nm, an active zone of 1.1×1.1 mm and a quartz window.

With reference to Figure 3, associated to the photodiode 7 is a focusing lens 10 which is able to concentrate the input beam on the sensor after the beam has been filtered by an optical filter 11.

According to the invention, the optical filter 11 associated to the sensor has an optical band of between 200 and 405 nm for selection of the radiation coming from the welding zone.

Once again in the case of a concrete embodiment, the electronic unit 8 comprises a data-acquisition card of the type PC card NI 6110E, with a maximum acquisition frequency of 5 Msamples/sec.

Figure 2 illustrates a diagram for the spectral response of the photodiode 7.

According to a further important characteristic of the invention, the electronic unit 8 acquires the signal issued by the sensor 7 with a frequency in the 10 kHz to 60 kHz range. The signal is then filtered using a band-pass filter, for example a Butterworth IIR filter, between 4 kHz and 10 kHz.

Studies and tests carried out by the applicant have shown that, by dividing the signal thus acquired and filtered into blocks, calculating the average of the signal in each block sampled, the blocks having a value lower than or equal to the offset of the photodiode are indicative of the presence of a defect.

In other words, thanks to the characteristics described above, the system according to the invention is able to identify the welding defects, without any need to resort to a comparison with reference signals indicating a good-quality weld, but simply on the basis of an analysis of the signal obtained during the actual process. In practice, when there exists a welding defect, in one or more of the sampled blocks of the signal emitted by the sensor, a mean value lower than or equal to the offset of the sensor is found.

In this way, the laborious operations that are necessary with known systems in order to make available reference signals are avoided.

## Claims

1. A system for controlling the quality of a laser weld, comprising:
- means (4) for focusing a laser beam (L) on a welding zone;
- an optical filter associated to photodiode sensor means (7) for detecting the radiation (E) emitted by the welding zone; and
- an electronic control and processing unit (8) for processing the signals issued by said sensor means (7);
**characterized in that** the optical filter (11) designed for selecting an optical waveband between 200 and 405 nm, **in that** said control and processing means (8) are designed to acquire the signal coming from said sensor means (7) with a frequency of between 10 and 60 kHz, and **in that** said control and processing means are designed to filter the signal acquired with the aid of a band-pass filter between 4 and 10 kHz, in such a way that control of the quality of the weld may be performed on the basis of the signal thus processed alone, without the need for a comparison with a pre-determined reference signal corresponding to a good-quality weld.

2. The system according to Claim 1, **characterized in that** the aforesaid control and processing means are designed to divide the signal thus acquired and filtered into blocks, and to average the signal for each block sampled, the blocks having a value lower than or equal to the offset of the sensor means being indicative of the presence of a welding defect.

3. The system according to Claim 1 or Claim 2, **characterized in that** the aforesaid focusing means comprise a half-reflecting mirror designed to reflect the laser beam to be directed into the welding zone and to be traversed by the radiation emitted by the welding zone to cause it to reach the sensor means.

4. The system according to Claim 1, **characterized in that** the aforesaid photodiode sensor means comprise a photodiode with a spectral response of between 190 and 1100 nm.

5. The system according to Claim 1, **characterized in that** the aforesaid sensor means comprise a focusing lens (10).

6. The system according to Claim 1, **characterized in that** the aforesaid band-pass filter is a Butterworth IIR filter.

7. A process for the quality control of a laser weld, comprising the steps of:
- focusing a laser beam (L) on a welding zone;
- detecting the radiation emitted by the welding zone with the aid of photodiode sensor means associated to an optical filter; and
- processing the signals issued by said sensor means;
**characterized in that** the optical filter is designed for selecting an optical waveband between 200 and 405 nm, **in that** the signals coming from the sensor means are acquired with a frequency of between 10 and 60 kHz, and **in that** the acquired signal is filtered with the aid of a band-pass filter between 4 and 10 kHz, in such a way that control of the quality of the weld may be performed on the basis of the signal thus processed alone, without the need for a comparison with a pre-determined reference signal corresponding to a good-quality weld.

8. The process according to Claim 7, **characterized in that** the signal thus acquired and filtered is divided into blocks, and **in that** the signal is averaged for each block sampled, the blocks having a value lower than or equal to the offset of the sensor means being indicative of the presence of a welding defect.

## Patentansprüche

1. System zur Kontrolle der Qualität einer Laserschweißung, umfassend:
- eine Vorrichtung (4) zum Fokussieren des Laserstrahles (L) auf einen Schweißbereich;
- ein zu einer Fotodiodensensoreinrichtung (7) gehörendes optisches Filter zum Erkennen der von einem Schweißbereich ausgestrahlten Strahlung (E);
- eine elektronische Steuer- und Verarbeitungseinheit (8) zum Verarbeiten der von der Sensoreinrichtung (7) ausgegebenen Signale, **dadurch gekennzeichnet, dass** das optische Filter (11) der Auswahl eines optischen Wellenbandes zwischen 200 und 405 nm dient, dass die Steuer- und Verarbeitungseinrichtung (8) der Erfassung von Signalen von der Sensoreinrichtung (7) mit einer Frequenz zwischen 10 und 60 kHz dient und dass die Steuer- und Verarbeitungseinrichtung der Filterung des mit Hilfe eines Bandfilters zwischen 4 und 10 kHz erfassten Signals auf eine Art und Weise dient, dass die Kontrolle der Qualität der Schweißung allein auf der Grundlage des verarbeiteten Signals erfolgen kann, ohne Notwendigkeit eines Vergleiches mit einem vorbestimmten Bezugssignal für eine Schweißung einwandfreier Qualität.

2. Schweißsystem nach Anspruch 1, **dadurch gekennzeichnet, dass** die Steuer- und Verarbeitungseinrichtung das erfasste und in Blöcke gefilterte Signal teilt und das Signal für jeden abgetasteten Block mittelt, wobei die Blöcke, die einen geringeren oder gleichen Wert haben als oder wie die Versetzung der Sensoreinrichtung ein Anzeichen für das Vorliegen eines Schweißfehlers sind.

3. System nach Anspruch 1 bzw. Anspruch 2, **dadurch gekennzeichnet, dass** die Fokussiereinrichtung einen halbreflektierenden Spiegel umfasst, der den Laserstrahl reflektieren soll, so dass dieser in den Schweißbereich gerichtet wird und von der Strahlung gekreuzt wird, die von dem Schweißbereich abgestrahlt wird, so dass diese die Sensoreinrichtung erreicht.

4. System nach Anspruch 1, **dadurch gekennzeichnet, dass** die Fotodiodensensoreinrichtung eine Fotodiode mit einer Spektralempfindlichkeit zwischen 190 und 1100 nm umfasst.

5. System nach Anspruch 1, **dadurch gekennzeichnet, dass** die Sensoreinrichtung eine Fokussierlinse (10) umfasst.

6. System nach Anspruch 1, **dadurch gekennzeichnet, dass** das Bandfilter ein Filter Butterworth IIR ist.

7. Verfahren für die Qualitätskontrolle einer Laserschweißung, umfassend die Schritte:
- Fokussieren eines Laserstrahles (L) auf einen Schweißbereich;
- Erkennen der von dem Schweißbereich abgestrahlten Strahlung mit Hilfe einer Fotodiodensensoreinrichtung zugehörig zu einem optischen Filter;
- Verarbeiten des von der Sensoreinrichtung ausgegebenen Signals, **dadurch gekennzeichnet, dass** das optische Filter der Auswahl eines optischen Wellenbandes zwischen 200 und 405 nm, erfasst mit einer Frequenz zwischen 10 und 60 kHz, dient, und dass das erfasste Signal mit Hilfe eines Bandfilters zwischen 4 und 10 kHz so gefiltert wird, dass die Kontrolle der Qualität der Schweißung auf der Grundlage des so verarbeiteten Signals allein erfolgen kann, also ohne Notwendigkeit des Vergleiches mit einem vorbestimmten Bezugssignal für eine Schweißung einwandfreier Qualität.

8. Verfahren nach Anspruch 7, **dadurch gekennzeichnet, dass** das wie beschrieben erfasste und gefilterte Signal in Blöcke aufgeteilt wird und dass das Signal für jeden abgetasteten Block gemittelt wird, wobei Blöcke mit einem geringeren oder gleichen Wert als oder wie der Versatz der Sensoreinrichtung ein Anzeichen für das Vorliegen eines Schweißfehlers sind.

## Revendications

1. Système pour contrôler la qualité d'une soudure laser, comprenant:
- des moyens (4) pour focaliser un rayon laser (L) sur une zone de soudage;
- un filtre optique associé à des moyens formant capteur à photodiode (7) pour détecter le rayonnement (E) émis par la zone de soudage; et
- une unité de commande et de traitement électronique (8) pour traiter les signaux délivrés par lesdits moyens formant capteur (7);
**caractérisé en ce que** le filtre optique (11) est conçu pour la sélection d'une bande d'ondes optiques comprise entre 200 et 405 nm, **en ce que** lesdits moyens de commande et de traitement (8) sont conçus de manière à acquérir le signal délivré par lesdits moyens formant capteur (7) avec une fréquence comprise entre 10 et 60 kHz, et **en ce que** lesdits moyens de commande et de traitement sont conçus pour filtrer le signal acquis à l'aide d'un filtre passe-bande entre 4 et 10 kHz, de telle sorte que le contrôle de la qualité de la soudure peut être exécuté sur la base du signal ainsi traité seul, sans la nécessité d'effectuer une comparaison avec un signal de référence prédéterminé correspondant à une soudure de bonne qualité.

2. Système selon la revendication 1, **caractérisé en ce que** les moyens de commande et de traitement indiqués précédemment sont conçus pour diviser le signal ainsi acquis et filtré en blocs et pour faire la moyenne du signal pour chaque bloc échantillonné, les blocs possédant une valeur inférieure ou égale au décalage des moyens formant capteur, qui est indicative de la présence d'un défaut de soudage.

3. Système selon la revendication 1 ou la revendication 2, **caractérisé en ce que** les moyens de focalisation indiqués précédemment comprennent un miroir semi-réfléchissant conçu pour réfléchir le faisceau laser devant être dirigé dans la zone de soudage et devant être traversé par le rayonnement émis par la zone de soudage pour faire qu'il atteigne les moyens formant capteur.

4. Système selon la revendication 1, **caractérisé en ce que** les moyens formant capteur à photodiode indiqués précédemment comprennent une photodiode ayant une réponse spectrale comprise entre 190 et 1100 nm.

5. Système selon la revendication 1, **caractérisé en ce que** les moyens formant capteur indiqués précédemment comprennent une lentille de focalisation (10).

6. Système selon la revendication 1, **caractérisé en ce que** le filtre passe-bande indiqué précédemment est un filtre de Butterworth IIR.

7. Procédé de contrôle de qualité d'une soudure laser, comprenant les étapes consistant à:
- focaliser un faisceau laser (L) sur une zone de soudage;
- détecter le rayonnement émis par la zone de soudage à l'aide des moyens formant capteur à photodiode associés à un filtre optique;
- traiter les signaux délivrés par lesdits moyens formant capteur;
**caractérisé en ce que** le filtre optique est conçu pour sélectionner une bande d'ondes optiques comprises entre 200 et 405 nm, **en ce que** les signaux arrivant des moyens formant capteur sont acquis avec une fréquence comprise entre 10 et 60 kHz, et **en ce que** le signal acquis est filtré à l'aide d'un filtre passe-bande entre 4 et 10 kHz, de telle sorte que la commande de la qualité de la soudure peut être exécutée sur la base du signal ainsi traité seul, sans la nécessité d'effectuer une comparaison avec un signal de référence prédéterminé correspondant à une soudure de bonne qualité.

8. Procédé selon la revendication 7, **caractérisé en ce que** le signal ainsi acquis est filtré et divisé en blocs et **en ce que** la moyenne du signal est formée pour chaque bloc échantillonné, les blocs ayant une valeur inférieure ou égale au décalage des moyens formant capteur, qui est indicative de la présence d'un défaut de soudage.
